# EUROPÄISCHE PATENTSCHRIFT

(11) **EP 3 392 098 B1**
(45) Veröffentlichungstag und Bekanntmachung des Hinweises auf die Patenterteilung: **11.11.2020**
(21) Anmeldenummer: 18166724.7
(22) Anmeldetag: 11.04.2018
(51) Int. Cl.: B60S 1/38, B60S 1/52

(54) **WISCHERVORRICHTUNG**
WIPER DEVICE
DISPOSITIF D'ESSUIE-GLACES

(30) Priorität: 21.04.2017 DE 102017206755
(43) Veröffentlichungstag der Anmeldung: 24.10.2018
(73) Patentinhaber: Robert Bosch GmbH, 70442 Stuttgart (DE)
(72) Erfinder: Kraemer, Godelieve, 76549 Huegelsheim (DE)

(56) Entgegenhaltungen:
- DE-A1-102015 216 045

## Beschreibung

### Stand der Technik

Es ist bereits eine Wischervorrichtung mit einer an einem Wischarm oder an einem Wischarmadapter angeordneten Düseneinheit vorgeschlagen worden.

Die DE 10 2015 216045 zeigt eine gattungsgemäße Wischervorrichtung.

### Offenbarung der Erfindung

Die Erfindung geht aus von einer Wischervorrichtung, insbesondere Scheibenwischervorrichtung, mit einer Düseneinheit.

Es wird vorgeschlagen, dass die Wischervorrichtung wenigstens ein Abdeckelement aufweist, welches dazu vorgesehen ist, die Düseneinheit in einem montierten Zustand in wenigstens einer Abdeckrichtung zumindest teilweise, insbesondere zumindest zu einem Großteil, zu verdecken. Die Düseneinheit weist zumindest ein erstes Kopplungselement, welches zu einer Kopplung mit dem Wischarmadapter vorgesehen ist, und zumindest ein zweites Kopplungselement, welches zu einer Kopplung mit einem weiteren Bauteil vorgesehen ist, auf. Dadurch kann eine vorteilhaft stabile Kopplung, Abstützung, Befestigung und/oder Fixierung der Düseneinheit, insbesondere in einem Fahrbetriebszustand, erreicht werden. Ferner kann insbesondere eine von der Düseneinheit unabhängige Montage und/oder ein von der Düseneinheit unabhängiger Austausch eines Wischblatts ermöglicht werden. Insbesondere kann das zweite Kopplungselement zu einer festen Verbindung mit dem weiteren Bauteil vorgesehen sein. Vorteilhaft ist das zweite Kopplungselement jedoch zu einer lösbaren Verbindung mit dem weiteren Bauteil vorgesehen. Insbesondere kann das weitere Bauteil als der Wischarm und/oder als ein Wischarmbauteil des Wischarms ausgebildet sein. Vorteilhaft ist das weitere Bauteil jedoch als eine Fluidleiteinheit ausgebildet. Vorteilhaft ist das Abdeckelement dazu vorgesehen, zumindest das erste Kopplungselement in dem montierten Zustand in wenigstens einer Abdeckrichtung, insbesondere der zuvor genannten Abdeckrichtung, zumindest teilweise, insbesondere zumindest zu einem Großteil und vorteilhaft vollständig, abzudecken. Unter einem "Kopplungselement" soll insbesondere ein Element verstanden werden, welches in zumindest einem Zustand, insbesondere dem montierten Zustand, dazu vorgesehen ist, an ein korrespondierendes weiteres Element, insbesondere weiteres Kopplungselement, zu koppeln. Vorteilhaft ist das Kopplungselement einstückig mit wenigstens einem, insbesondere verschieden von dem Kopplungselement ausgebildeten, Bauteil verbunden und vorzugsweise mit dem Bauteil ausgebildet, und bildet mit dem korrespondierenden weiteren Kopplungselement, welches insbesondere einstückig mit wenigstens einem, insbesondere verschieden von dem weiteren Kopplungselement ausgebildeten, weiteren Bauteil verbunden und vorzugsweise ausgebildet ist, eine Kopplungsverbindung zwischen dem Bauteil und dem weiteren Bauteil. Unter "einstückig" soll insbesondere zumindest stoffschlüssig verbunden und/oder miteinander ausgebildet verstanden werden. Der Stoffschluss kann beispielsweise durch einen Klebeprozess, einen Anspritzprozess, einen Schweißprozess, einen Lötprozess und/oder einen anderen Prozess hergestellt werden. Vorteilhaft soll unter einstückig aus einem Stück und/oder in einem Stück geformt verstanden werden. Vorzugsweise wird dieses eine Stück aus einem einzelnen Rohling, einer Masse und/oder einem Guss, wie beispielsweise in einem Extrusionsverfahren, insbesondere einem Ein- und/oder Mehrkomponenten-Extrusionsverfahren, und/oder einem Spritzgussverfahren, insbesondere einem Ein- und/oder Mehrkomponenten-Spritzgussverfahren, hergestellt. Unter einer "Fluidleiteinheit" soll insbesondere eine Einheit verstanden werden, welche zumindest dazu vorgesehen ist, in zumindest einem Betriebszustand, insbesondere einem Reinigungsbetriebszustand, einen Fluidstrom, insbesondere eines Reinigungsfluids, vorteilhaft eines Waschwassers und besonders vorteilhaft eines Scheibenwaschwassers, zumindest abschnittsweise zu leiten. Vorteilhaft ist die Fluidleiteinheit in einem montierten Zustand insbesondere lösbar mit dem Wischarm verbunden. Um eine Effizienz, vorteilhaft eine Bauteileeffizienz, eine Montageeffizienz, eine Herstellungseffizienz und/oder eine Kosteneffizienz, zu ermöglichen, wird ferner vorgeschlagen, dass die Wischervorrichtung einen Wischarmadapter, den zuvor genannten Wischarmadapter, aufweist, welcher zu einer lösbaren Verbindung eines Wischblatts, des zuvor genannten Wischblatts, an einem Wischarm, dem zuvor genannten Wischarm, vorgesehen ist und welcher das Abdeckelement zumindest teilweise umfasst. Vorteilhaft bilden der Wischarmadapter und das Abdeckelement ein einziges Bauteil aus. Unter "lösbar" soll "zerstörungsfrei trennbar" verstanden werden.

Unter einer "Wischervorrichtung" soll insbesondere zumindest ein Teil, insbesondere eine Unterbaugruppe, eines Wischers verstanden werden. Insbesondere kann die Wischervorrichtung zusätzlich zumindest einen Wischarm, zumindest ein Wischblatt, zumindest einen Wischarmadapter und/oder zumindest einen Wischblattadapter umfassen. Vorteilhaft ist das Wischblatt mit dem Wischarm koppelbar, insbesondere mittels des Wischarmadapters und/oder mittels des Wischblattadapters. Unter einem "Wischarmadapter" soll insbesondere ein Adapter verstanden werden, der einen Kontaktbereich zu einem Wischarmbauteil des Wischarms aufweist und vorzugsweise mit dem Wischarmbauteil unverlierbar verbunden ist und insbesondere dazu vorgesehen ist, einen Kopplungsbereich des Wischarmbauteils für eine Kopplung und/oder Kontaktierung mit einem Wischblattadapter bereitzustellen. Vorteilhaft besteht der Wischarmadapter aus einem einzigen Bauteil. Ferner soll unter einem "Wischblattadapter" insbesondere ein Adapter verstanden werden, der einen Kontaktbereich zu einem Wischblattbauteil des Wischblatts aufweist und vorzugsweise mit dem Wischblattbauteil unverlierbar verbunden ist und insbesondere dazu vorgesehen ist, einen Kopplungsbereich des Wischblattbauteils für eine Kopplung und/oder Kontaktierung mit einem Wischarmadapter bereitzustellen. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einer "Düseneinheit" soll insbesondere eine Einheit verstanden werden, welche zumindest ein Düsenelement und vorteilhaft mehrere Düsenelemente aufweist und welche dazu vorgesehen ist, ein Fluid, insbesondere ein Reinigungsfluid, vorteilhaft ein Waschwasser und besonders vorteilhaft ein Scheibenwaschwasser, auf einer Wischoberfläche, insbesondere einer Scheibe, aufzubringen. Unter einem "Düsenelement" soll insbesondere ein mit einem Fluidleitelement, insbesondere einem Rohrelement und/oder einem Schlauchelement, welches zur Zuführung eines Fluidstroms vorgesehen ist, direkt fluidtechnisch verbundenes Element verstanden werden, welches dazu vorgesehen ist, insbesondere mittels einer Verengung eines Strömungsquerschnitts des Fluidstroms, eine Strömungsgeschwindigkeit des Fluidstroms gegenüber dem Fluidleitelement zu erhöhen und insbesondere den Fluidstrom zu emittieren. Vorteilhaft bildet das Düsenelement ein als Düsenausgang ausgebildetes Ende aus.

Das Abdeckelement ist insbesondere aus einem einzigen Bauteil ausgebildet. Ferner ist insbesondere zumindest ein Teil, vorteilhaft zumindest ein Großteil, des Abdeckelements plattenartig und/oder scheibenartig ausgebildet. Insbesondere ist der Teil als ein Fortsatz ausgebildet. Vorteilhaft ist das Abdeckelement dazu vorgesehen, in der Abdeckrichtung betrachtet möglichst viele Düsenausgänge der Düseneinheit abzudecken. Unter einem "Großteil" eines Objekts soll insbesondere ein Teil des Objektes verstanden werden, welcher mehr als 50 %, insbesondere mehr als 70 %, vorteilhaft mehr als 85 %, und besonders vorteilhaft mehr als 95 % eines Volumens des Objektes ausbildet. Unter dem Ausdruck "zumindest zu einem Großteil" sollen dabei mehr als 50 %, insbesondere mehr als 70 %, vorteilhaft mehr als 85 %, und besonders vorteilhaft mehr als 95 % verstanden werden. Darunter, dass das Abdeckelement die Düseneinheit "zumindest zu einem Großteil verdeckt", soll insbesondere verstanden werden, dass das Abdeckelement eine Umrissfläche der Düseneinheit zumindest zu einem Großteil verdeckt.

Die Abdeckrichtung kann insbesondere eine jede Richtung in einer Ebene senkrecht zu einer Längsrichtung sein. Vorteilhaft ist die Abdeckrichtung eine Richtung senkrecht zu einer Haupterstreckungsebene des Abdeckelements. Unter einer "Haupterstreckungsebene" eines Objekts soll insbesondere eine Ebene verstanden werden, welche parallel zu einer größten Seitenfläche eines kleinsten gedachten Quaders ist, welcher die Baueinheit gerade noch vollständig umschließt, und insbesondere durch den Mittelpunkt des Quaders verläuft. Unter einer "Längsrichtung" soll insbesondere eine Richtung verstanden werden, welche zumindest im Wesentlichen parallel zu einer Längserstreckungsrichtung des Wischblatts und/oder des Wischarms verläuft. Unter dem Ausdruck "zumindest im Wesentlichen parallel" soll insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Ferner soll unter einer "Längserstreckungsrichtung" eines Objekts insbesondere eine Richtung verstanden werden, welche parallel zu einer längsten Kante eines kleinsten, das Objekt gerade noch umschließenden, insbesondere gedachten, Quaders ist. Durch diese Ausgestaltung kann insbesondere eine Wischervorrichtung mit verbesserten Eigenschaften hinsichtlich einer Aerodynamik und/oder eines Schutzes, insbesondere eines Sichtschutzes und/oder eines Steinschlagschutzes, einer Düseneinheit bereitgestellt werden. Ferner kann eine Ästhetik und/oder eine unauffällige Benetzung einer Wischfläche mit einem Reinigungsfluid durch eine Düseneinheit realisiert werden.

Insbesondere um eine einfache Bauweise zu ermöglichen, wird zudem vorgeschlagen, dass das erste Kopplungselement in wenigstens einer Richtung, insbesondere einer Längserstreckungsrichtung des ersten Kopplungselements, betrachtet ein L-förmiges Profil aufweist. Insbesondere ist das erste Kopplungselement schienenartig ausgebildet. Unter einem "schienenartigen" Objekt soll insbesondere ein Objekt verstanden werden, welches über zumindest einen Großteil einer Längserstreckung des Objekts und vorteilhaft über die gesamte Längserstreckung ein gleichbleibendes Profil aufweist. Unter "zumindest einem Großteil einer Längserstreckung" eines Objektes soll insbesondere ein Teil des Objektes verstanden werden, welcher zu mehr als 50 %, insbesondere zu mehr als 70 %, vorteilhaft zu mehr als 85 % und besonders vorteilhaft zu mehr als 95 % zu einer Längserstreckung des Objektes in einer Längserstreckungsrichtung des Objektes beiträgt.

Des Weiteren wird vorgeschlagen, dass der Wischarmadapter zumindest ein als Führungselement ausgebildetes drittes Kopplungselement aufweist, das dazu vorgesehen ist, die Düseneinheit bei einer Montage zu führen. Hierdurch kann vorteilhaft eine Montageeffizienz, insbesondere eine einfache und/oder eine schnelle Montage, erreicht werden. Insbesondere ist das dritte Kopplungselement schienenartig ausgebildet. Vorteilhaft ist das dritte Kopplungselement dazu vorgesehen, in dem montierten Zustand die Düseneinheit an dem Wischarmadapter abzustützen, insbesondere in der Richtung senkrecht zu der Längsrichtung. Ferner sind insbesondere das erste Kopplungselement und das dritte Kopplungselement zueinander korrespondierend ausgebildet. Vorteilhaft sind das erste Kopplungselement und das zweite Kopplungselement dazu vorgesehen, bei der Montage zu einer Führung der Düseneinheit an dem Wischarmadapter zusammenzuwirken. Ferner sind vorteilhaft das erste Kopplungselement und das zweite Kopplungselement dazu vorgesehen, in dem montierten Zustand zu einer Abstützung der Düseneinheit an dem Wischarmadapter zusammenzuwirken.

Insbesondere um eine stabile Bauweise und/oder um eine vorteilhafte Abdeckung, insbesondere der Düseneinheit, zu realisieren, wird darüber hinaus vorgeschlagen, dass das Abdeckelement in wenigstens einer Richtung, insbesondere der Längsrichtung, betrachtet ein L-förmiges Profil aufweist. Vorteilhaft ist eine Umrissfläche des Abdeckelements in der insbesondere als Längsrichtung ausgebildeten Richtung betrachtet kleiner als in einer jeden weiteren Richtung betrachtet.

Gemäß einer weiteren Ausgestaltung wird vorgeschlagen, dass ein, insbesondere als ein kurzer Schenkel ausgebildeter, erster Schenkel des L-förmigen Profils mit einem, insbesondere als ein langer Schenkel ausgebildeten, zweiten Schenkel des L-förmigen Profils einen Winkel von mehr als 90°, insbesondere von mehr als 100° und vorteilhaft von mehr als 110°, und von weniger als 180°, insbesondere von weniger als 160°, vorteilhaft von weniger als 140° und besonders vorteilhaft von weniger als 120°, einschließt. Vorteilhaft bildet der zweite Schenkel ein freies Ende des L-förmigen Profils. Ferner ist vorteilhaft der erste Schenkel mit dem zweiten Schenkel einstückig verbunden und besonders vorteilhaft sind der erste Schenkel und der zweite Schenkel als ein einziges Bauteil ausgebildet. Dadurch kann eine vorteilhafte Aerodynamik, eine vorteilhafte Führung und/oder eine hohe Stabilität realisiert werden.

Ferner wird vorgeschlagen, dass die Düseneinheit ein erstes Düsenelement und wenigstens ein zweites Düsenelement aufweist, wobei eine erste Strahlachse des ersten Düsenelements mit einer zweiten Strahlachse des zweiten Düsenelements einen Winkel von wenigstens 5°, insbesondere von wenigstens 15°, vorteilhaft von wenigstens 30°, besonders vorteilhaft von wenigstens 45°, vorzugsweise von wenigstens 90° und besonders bevorzugt von wenigstens 135°, einschließt. Hierdurch kann vorteilhaft eine gleichmäßige und/oder großflächige Verteilung eines Reinigungsfluids auf einer Wischfläche und/oder eine vorteilhafte Abdeckung der Düseneinheit erreichen werden. Vorteilhaft weist die Düseneinheit zumindest ein drittes Düsenelement auf, wobei besonders vorteilhaft eine dritte Strahlachse des dritten Düsenelements mit der ersten Strahlachse und/oder der zweiten Strahlachse einen Winkel von wenigstens 5°, insbesondere von wenigstens 15°, vorteilhaft von wenigstens 30°, besonders vorteilhaft von wenigstens 45°, vorzugsweise von wenigstens 90° und besonders bevorzugt von wenigstens 135°, einschließt. Insbesondere vereinigen sich Düsenfluidzuströme des ersten Düsenelements, des zweiten Düsenelements und/oder des dritten Düsenelements entgegen Fluidstromrichtung in einem gemeinsamen Fluidzustrom. Ferner weist die Düseneinheit verästelte und insbesondere als Rohrelemente ausgebildete Fluidleitelemente auf, welche die Düsenfluidzuströme dem ersten Düsenelement, dem zweiten Düsenelement und/oder dem dritten Düsenelement zuführen. Unter einer "Strahlachse" eines Düsenelements soll insbesondere eine Achse durch einen Mittelpunkt einer Düsenöffnung des Düsenelements in Richtung eines Bewegungsvektors eines Massenschwerpunkts eines definierten, unmittelbar von dem Düsenelement emittierten Fluidvolumens, verstanden werden.

Insbesondere um eine kompakte Bauweise und/oder um eine ungehinderte Emission des Reinigungsfluids zu ermöglichen wird zudem vorgeschlagen, dass die Düseneinheit zumindest ein, insbesondere genau ein, Düsenelement aufweist, welches eine Ausnehmung des Abdeckelements zumindest teilweise durchdringt. Vorteilhaft ist die Ausnehmung in einem, insbesondere dem Wischarm zugewandten, Randbereich des Abdeckelements angeordnet.

Ferner geht die Erfindung aus von einem Wischer, insbesondere Scheibenwischer, mit einer Wischervorrichtung nach einem der vorhergehenden Ansprüche. Insbesondere ist der Wischer als ein Scheibenwischer, vorteilhaft als ein Fahrzeugscheibenwischer und besonders vorteilhaft als ein Kraftfahrzeugscheibenwischer ausgebildet. Durch diese Ausgestaltung kann insbesondere eine Wischervorrichtung mit verbesserten Eigenschaften hinsichtlich einer Aerodynamik und/oder eines Schutzes, insbesondere eines Sichtschutzes und/oder eines Steinschlagschutzes, einer Düseneinheit bereitgestellt werden. Ferner kann eine Ästhetik und/oder eine unauffällige Benetzung einer Wischfläche mit einem Reinigungsfluid durch eine Düseneinheit realisiert werden.

Die erfindungsgemäße Wischervorrichtung und der erfindungsgemäße Wischer sollen hierbei nicht auf die oben beschriebene Anwendung und Ausführungsform beschränkt sein. Insbesondere können die erfindungsgemäße Wischervorrichtung und der erfindungsgemäße Wischer zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen als Scheibenwischer ausgebildeten Wischer mit einem Wischblatt, mit einem Teil eines Wischarms, mit einem Wischblattadapter und mit einer Wischervorrichtung, die einen Wischarmadapter und eine Fluidleiteinheit aufweist, in einer perspektivischen Ansicht,
- Fig. 2: einen Querschnitt durch den Wischarm, durch das Wischblatt und durch die Fluidleiteinheit, von einem Innenkreis zu einem Außenkreis hin betrachtet,
- Fig. 3: einen Querschnitt durch den Wischarm und durch die Fluidleiteinheit in einem montierten Zustand der Fluidleiteinheit,
- Fig. 4: einen Querschnitt durch den Wischarm und durch die Fluidleiteinheit in einem Zwischenmontagezustand der Fluidleiteinheit,
- Fig. 5: einen Querschnitt durch die Fluidleiteinheit in einem demontierten Zustand der Fluidleiteinheit,
- Fig. 6: eine perspektivische Ansicht eines Teils des Wischarms und eines Teils der Fluidleiteinheit ohne eine Düseneinheit in dem montierten Zustand der Fluidleiteinheit,
- Fig. 7: eine perspektivische Ansicht eines Teils des Wischarms und eines Teils der Wischervorrichtung mit der Fluidleiteinheit und einer Düseneinheit in einem demontierten Zustand des Wischarms,
- Fig. 8: eine perspektivische Ansicht eines Teils des Wischarms, eines Teils der Fluidleiteinheit und der Düseneinheit in dem demontierten Zustand des Wischarms,
- Fig. 9: eine perspektivische Ansicht der Wischervorrichtung in einem montierten Zustand des Wischarms,
- Fig. 10: eine perspektivische Ansicht eines Teils des Wischblatts, eines Teils des Wischblattadapters, des Wischarmadapters und des Abdeckelements in dem demontierten Zustand des Wischarms,
- Fig. 11: den Wischarmadapter mit dem Abdeckelement in einer Längsrichtung betrachtet,
- Fig. 12: eine Ansicht auf eine Düsenseite eines Teils des Wischers mit der Wischervorrichtung,
- Fig. 13: einen Teil des Wischers mit der Wischervorrichtung in einer Abdeckrichtung betrachtet,
- Fig. 14: einen Teil des Wischers mit der Wischervorrichtung in einer Draufsicht und
- Fig. 15: eine Ansicht auf eine der Düsenseite entgegengesetzte Seite eines Teils des Wischers mit der Wischervorrichtung.

### Beschreibung des Ausführungsbeispiels

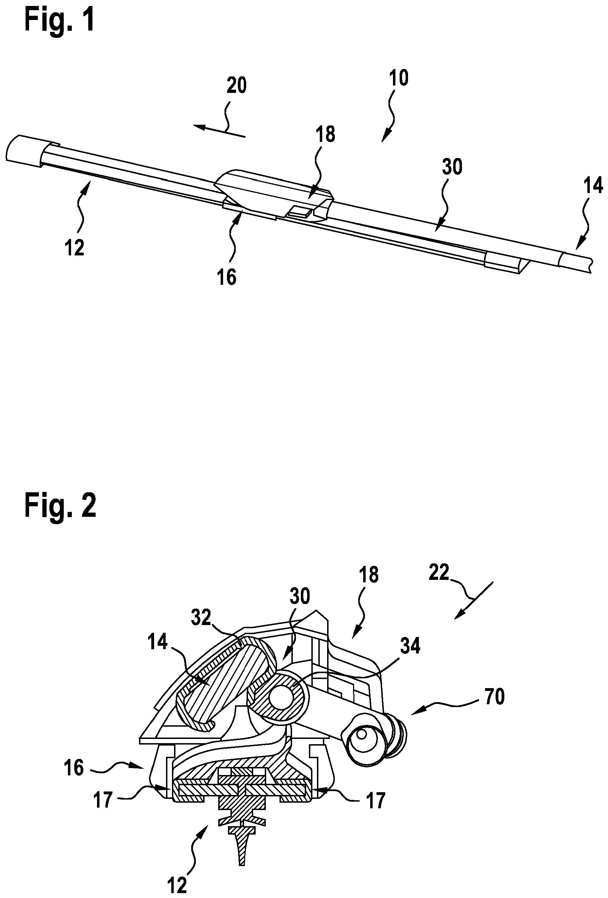

Figur 1 zeigt einen beispielhaft als ein Scheibenwischer ausgebildeten Wischer 10. Im vorliegenden Fall ist der Wischer 10 als ein Fahrzeugscheibenwischer, insbesondere als ein Kraftfahrzeugscheibenwischer ausgebildet. Der Wischer 10 ist in einem montierten Zustand dargestellt. Der Wischer 10 ist zumindest in einem Reinigungsbetriebszustand dazu vorgesehen, eine nicht näher dargestellte Wischfläche von Nässe und/oder Verschmutzung zu reinigen. Im vorliegenden Fall ist die Wischfläche als eine Scheibe, insbesondere eine Fahrzeugscheibe, ausgebildet. Grundsätzlich ist auch denkbar, dass eine Scheibe als eine Fensterscheibe ausgebildet ist.

Der Wischer 10 umfasst ein Wischblatt 12. Eine Längserstreckungsrichtung des Wischblatts 12 definiert eine Längsrichtung 20. Das Wischblatt 12 bildet in dem montierten Zustand einen Formschluss mit der Wischfläche. Das Wischblatt 12 ist zumindest in dem Reinigungsbetriebszustand dazu vorgesehen, Nässe und/oder Verschmutzung von der Wischfläche zu ziehen.

Des Weiteren weist der Wischer 10 einen Wischarm 14 auf. Im vorliegenden Fall ist eine Längserstreckungsrichtung des Wischarms 14 parallel zu der Längsrichtung 20 angeordnet. Alternativ könnte eine Längserstreckung eines Wischarms verschieden von einer Längsrichtung sein.

Der Wischer 10 umfasst einen Wischblattadapter 16. Der Wischblattadapter 16 weist einen Kontaktbereich 17 zu dem Wischblatt 12 auf (vgl. Figur 2).

Ferner weist der Wischer 10 eine Wischervorrichtung auf. Die Wischervorrichtung ist als eine Scheibenwischervorrichtung ausgebildet. Die Wischervorrichtung ist im vorliegenden Fall als eine Fahrzeugscheibenwischervorrichtung, insbesondere als eine Kraftfahrzeugscheibenwischervorrichtung, ausgebildet.

Die Wischervorrichtung umfasst einen Wischarmadapter 18. Der Wischarmadapter 18 ist im vorliegenden Fall als ein einziges Bauteil ausgebildet. Der Wischarmadapter 18 ist zu einer lösbaren Verbindung des Wischblatts 12 an dem Wischarm 14 vorgesehen. Der Wischarmadapter 18 ist dazu vorgesehen, den Wischarm 14 mit dem Wischblattadapter 16 lösbar zu verbinden. Der Wischarmadapter 18 ist dazu vorgesehen, den Wischarm 14 mittels des Wischblattadapters 16 lösbar mit dem Wischblatt 12 zu verbinden. Der Wischblattadapter 16 ist dazu vorgesehen, das Wischblatt 12 mittels des Wischarmadapters 18 lösbar mit dem Wischarm 14 zu verbinden. Alternativ könnte ein Wischarmadapter mehrteilig ausgebildet sein. Ferner könnte ein Wischarmadapter zu einer permanenten Verbindung eines Wischblatts an einem Wischarm vorgesehen sein.

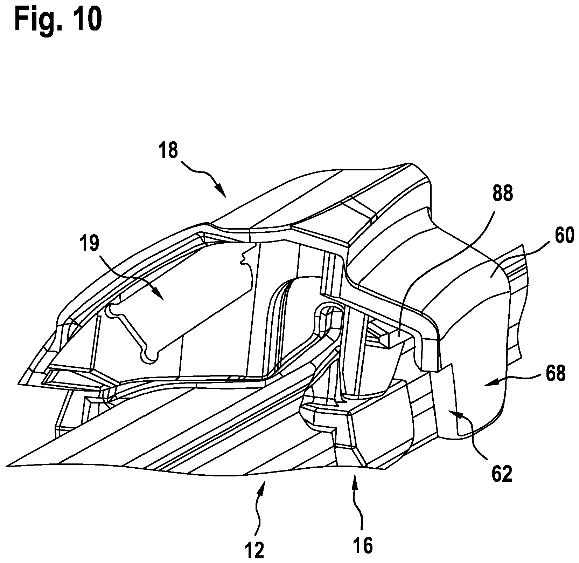

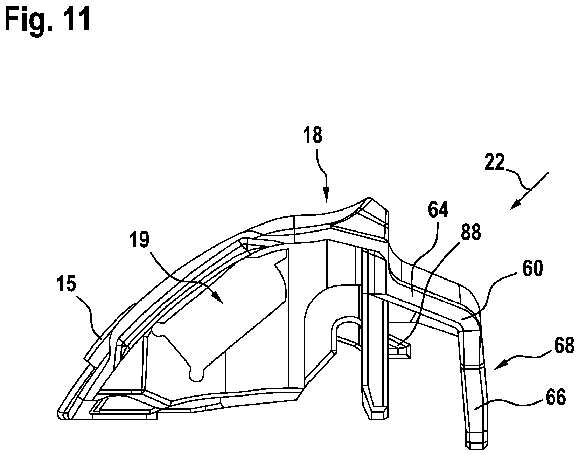

Der Wischarmadapter 18 weist einen Kontaktbereich 19 zu dem Wischarm 14, im vorliegenden Fall zu einem Kopplungselement 90 des Wischarms 14, auf (vgl. Figuren 10 und 11). Der Wischarmadapter 18 weist ein Betätigungselement 15 auf. Das Betätigungselement 15 ist als ein Betätigungsknopf ausgebildet. Das Betätigungselement 15 ist dazu vorgesehen, eine lösbare Verbindung zwischen dem Wischarmadapter 18 und dem Wischarm 14 zu verriegeln und zu entriegeln. Dadurch kann in einem Servicefall das Wischblatt 12 zusammen mit dem Wischblattadapter 16 und dem Wischarmadapter 18 ausgetauscht werden.

Die Wischervorrichtung umfasst eine Fluidleiteinheit 30, welche in den Figuren 2 bis 6 näher dargestellt ist. Die Fluidleiteinheit 30 ist einstückig ausgebildet. Die Fluidleiteinheit 30 ist als ein Mehrkomponentenbauteil ausgebildet. Im vorliegenden Fall ist die Fluidleiteinheit 30 als ein Zweikomponentenbauteil ausgebildet. Die Fluidleiteinheit 30 umfasst zwei Komponenten. Die Fluidleiteinheit 30 weist im vorliegenden Fall über eine gesamte Längserstreckung der Fluidleiteinheit 30 ein gleichbleibendes Profil auf. Die Fluidleiteinheit 30 ist mittels eines Extrusionsverfahrens hergestellt. Im vorliegenden Fall ist die Fluidleiteinheit 30 mittels eines Mehrkomponenten-Extrusionsverfahrens hergestellt. Die Fluidleiteinheit 30 ist dazu vorgesehen, bei einer Montage auf den Wischarm 14 geklipst zu werden. Die Fluidleiteinheit 30 ist dazu vorgesehen, zumindest in dem Reinigungsbetriebszustand ein Reinigungsfluid zu leiten. Im vorliegenden Fall ist das Reinigungsfluid als ein Waschwasser, insbesondere als ein Scheibenwaschwasser ausgebildet. Alternativ könnte eine Fluidleiteinheit mehrteilig ausgebildet sein.

Ferner könnte eine Fluidleiteinheit lediglich eine Komponente oder zumindest drei Komponenten aufweisen. Zudem könnte eine Fluidleiteinheit mittels eines Spritzgussverfahrens, insbesondere eines Mehrkomponenten-Spritzgussverfahrens, hergestellt sein. Zudem könnte eine Fluidleiteinheit dazu vorgesehen sein, bei einer Montage auf einen Wischarm geschoben zu werden.

Die Fluidleiteinheit 30 weist ein Befestigungselement 32 auf. Das Befestigungselement 32 ist als eine erste Komponente der Komponenten ausgebildet. Das Befestigungselement 32 weist über eine gesamte Längserstreckung des Befestigungselements 32 ein gleichbleibendes Profil auf. Das Befestigungselement 32 weist zumindest ein U-förmiges Profil auf. Im vorliegenden Fall weist das Befestigungselement 32 zumindest ein C-förmiges Profil auf. Alternativ könnte eine Fluidleiteinheit mehrere Befestigungselemente aufweisen. Ferner könnte ein Befestigungselement lediglich über einen Teil einer Längserstreckung des Befestigungselements ein gleichbleibendes Profil aufweisen. Zudem könnte ein Befestigungselement ein O-förmiges Profil aufweisen.

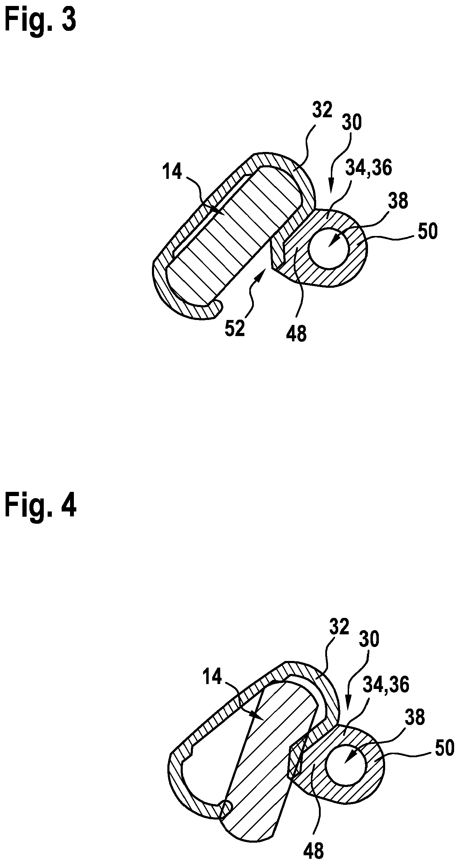

Das Befestigungselement 32 ist zu einer Befestigung an dem Wischarm 14 vorgesehen. Das Befestigungselement 32 ist zu einer lösbaren Befestigung der Fluidleiteinheit 30 an dem Wischarm 14 vorgesehen. Das Befestigungselement 32 ist dazu vorgesehen, den Wischarm 14 zumindest zu einem Großteil zu umgreifen. Im vorliegenden Fall wird das Befestigungselement 32 bei einer in Figur 4 gezeigten Montage auf den Wischarm 14 gesteckt. Dazu werden zwei Enden des Befestigungselements 32 ausgelenkt. Alternativ könnte ein Befestigungselement zu einer permanenten Befestigung einer Fluidleiteinheit an einem Wischarm vorgesehen sein. Ferner könnte ein Befestigungselement bei einer Montage auf einen Wischarm geschoben werden.

Die Fluidleiteinheit 30 umfasst ein Kanalelement 34. Das Kanalelement 34 ist in dem montierten Zustand, welcher in Figur 3 gezeigt ist, an einer dem Wischarm 14 abgewandten Seite des Befestigungselements 32 angeordnet. Das Kanalelement 34 ist in dem montierten Zustand an einer Windschattenseite des Befestigungselements 32 angeordnet. Das Kanalelement 34 ist in dem montierten Zustand in einer Profilansicht betrachtet an einem Ende 52 des Befestigungselements 32 angeordnet. Eine Längserstreckungsrichtung des Kanalelements 34 ist parallel zu einer Längserstreckungsrichtung des Befestigungselements 32 angeordnet. Das Kanalelement 34 ist als eine zweite Komponente der Komponenten ausgebildet. Das Kanalelement 34 ist flexibel ausgebildet. Das Kanalelement 34 ist als ein Schlauchelement ausgebildet. Das Kanalelement 34 weist über eine gesamte Längserstreckung des Kanalelements 34 ein gleichbleibendes Profil auf. Das Kanalelement 34 ist zu einer Führung eines Fluidstroms des Reinigungsfluids vorgesehen. Alternativ könnte eine Fluidleiteinheit mehrere Kanalelemente aufweisen. Ferner könnte ein Kanalelement in einem montierten Zustand an einer einem Wischarm zugewandten Seite eines Befestigungselements angeordnet sein. Zudem könnte ein Kanalelement in einem montierten Zustand an einer Windseite eines Befestigungselements angeordnet sein. Des Weiteren könnte ein Kanalelement an einem Mittelabschnitt eines Befestigungselements angeordnet sein. Grundsätzlich ist es auch denkbar, dass ein Kanalelement starr ausgebildet ist. Zudem ist denkbar, dass ein Kanalelement als ein Rohrelement ausgebildet ist. Ferner könnte ein Kanalelement lediglich über einen Teil einer Längserstreckung des Kanalelements ein gleichbleibendes Profil aufweisen.

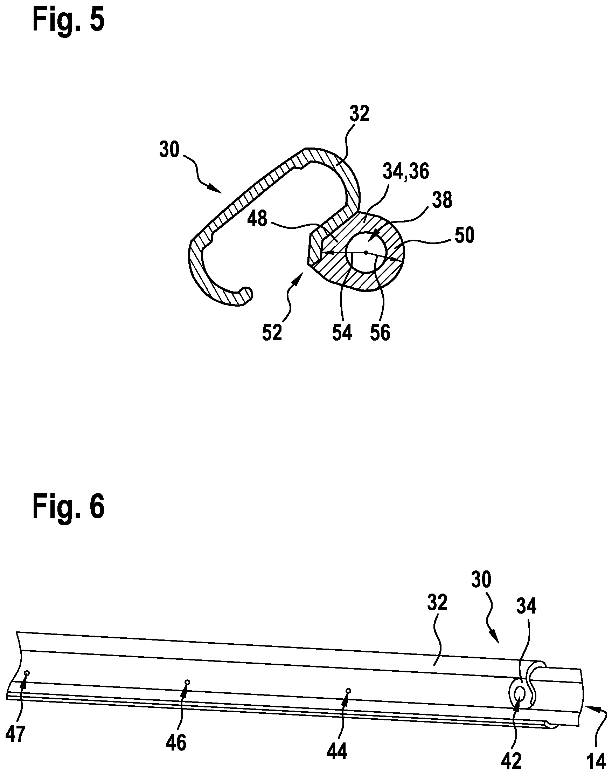

Das Kanalelement 34 ist durch eine Kanalwand 36 gebildet. Ein dem Befestigungselement 32 zugewandter Wandteil 48 des Kanalelements 34 weist eine höhere Wandstärke auf als ein dem Befestigungselement 32 abgewandter weiterer Wandteil 50 des Kanalelements 34. Beispielsweise ist der Wandteil 48 des Kanalelements 34 in einer Profilansicht betrachtet zumindest an dem Ende 52 des Befestigungselements 32 mit dem Befestigungselement 32 verbunden. Im vorliegenden Fall trägt der Wandteil 48 des Kanalelements 34 zu mehr als der Hälfte zu einem Außenradius 54 des Kanalelements 34 bei (vgl. Figur 5). Ferner trägt im vorliegenden Fall der weitere Wandteil 50 des Kanalelements 34 zu weniger als der Hälfte zu einem weiteren Außenradius 56 des Kanalelements 34 bei. Alternativ könnte ein Kanalelement eine gleichmäßige Wandstärke aufweisen. Zudem könnte ein Wandteil eines Kanalelements an einem von einem Ende verschiedenen Teil eines Befestigungselements mit dem Befestigungselement verbunden sein.

Das Kanalelement 34 umschließt einen Kanal 38. Der Kanal 38 weist im vorliegenden Fall einen kreisrunden Kanalquerschnitt auf. Der Kanal 38 ist zu einer Aufnahme des Fluidstroms vorgesehen. Das Kanalelement 34 weist eine nicht weiter dargestellte Haupteintrittsöffnung auf. Die Haupteintrittsöffnung ist fluidtechnisch mit einem Fahrzeuginneren verbunden. Ferner weist das Kanalelement 34 eine in Figur 6 dargestellte Hauptaustrittsöffnung 42 auf. Das Kanalelement 34 weist wenigstens zwei Seitenöffnungen 44, 46 auf. Im vorliegenden Fall weist das Kanalelement 34 eine dritte Seitenöffnung 47 auf. Ferner weist das Kanalelement 34 weitere, nicht gezeigte Seitenöffnungen auf. Alternativ könnte ein Kanal einen ovalen, einen halbkreisförmigen, einen dreieckigen und/oder einen rechteckigen, insbesondere quadratischen, Kanalquerschnitt aufweisen, wobei Ecken in dem Kanalquerschnitt abgerundet ausgebildet sein können. Grundsätzlich ist auch denkbar, dass ein Kanalelement lediglich eine Seitenöffnung aufweist.

Die Seitenöffnungen 44, 46, die dritte Seitenöffnung 47 und die weiteren Seitenöffnungen sind in gleichmäßigen Abständen zueinander angeordnet. Ein Abstand einer ersten Seitenöffnung 44 der Seitenöffnungen 44, 46 zu einer zweiten Seitenöffnung 46 der Seitenöffnungen 44, 46 ist gleich einem Abstand der zweiten Seitenöffnung 46 zu der dritten Seitenöffnung 47. Die Seitenöffnungen 44, 46 sind verschieden zu der Haupteintrittsöffnung ausgebildet. Ferner sind die Seitenöffnungen 44, 46 verschieden zu der Hauptaustrittsöffnung 42 ausgebildet. Die Seitenöffnungen 44, 46 sind im vorliegenden Fall als Düsenöffnungen ausgebildet. Die Seitenöffnungen 44, 46 weisen im vorliegenden Fall einen kreisrunden Öffnungsquerschnitt auf. Alternativ könnten Seitenöffnungen in unregelmäßigen Abständen zueinander angeordnet sein. Ferner könnten Seitenöffnungen einen ovalen, einen halbkreisförmigen, einen dreieckigen und/oder einen rechteckigen, insbesondere quadratischen, Öffnungsquerschnitt aufweisen, wobei Ecken in dem Öffnungsquerschnitt abgerundet ausgebildet sein können.

Zumindest in dem Reinigungsbetriebszustand durchströmt ein erster Teilfluidstrom eine erste Seitenöffnung 44 der Seitenöffnungen 44, 46. Der erste Teilfluidstrom durchströmt die erste Seitenöffnung 44 in einer ersten Teilfluidstromrichtung. Die erste Teilfluidstromrichtung ist verschieden von einer Längserstreckungsrichtung des Kanalelements 34 ausgebildet. Ferner durchströmt in dem Reinigungsbetriebszustand ein zweiter Teilfluidstrom eine zweite Seitenöffnung 46 der Seitenöffnungen 44, 46. Der zweite Teilfluidstrom durchströmt die zweite Seitenöffnung 46 in einer zweiten Teilfluidstromrichtung. Die zweite Teilfluidstromrichtung ist verschieden von einer Längserstreckungsrichtung des Kanalelements 34 ausgebildet.

Das Kanalelement 34 ist verschieden von dem Befestigungselement 32 ausgebildet. Das Kanalelement 34 ist einstückig mit dem Befestigungselement 32 ausgebildet. Das Befestigungselement 32 und das Kanalelement 34 sind aus verschiedenen Materialien gebildet. Im vorliegenden Fall sind das Befestigungselement 32 und das Kanalelement 34 vollständig aus verschiedenen Materialien gebildet. Das Kanalelement 34 ist weicher als das Befestigungselement 32. Im vorliegenden Fall weisen das Kanalelement 34 und das Befestigungselement 32 eine selbe Länge in Längserstreckungsrichtung auf. Grundsätzlich ist auch denkbar, dass ein Kanalelement und ein Befestigungselement lösbar miteinander verbunden sind. Zudem könnten ein Kanalelement und ein Befestigungselement aus einem selben Material bestehen. Ferner könnten ein Kanalelement und ein Befestigungselement eine selbe Härte aufweisen. Es ist auch denkbar, dass ein Kanalelement und ein Befestigungselement verschiedene Längen in Längserstreckungsrichtung aufweisen.

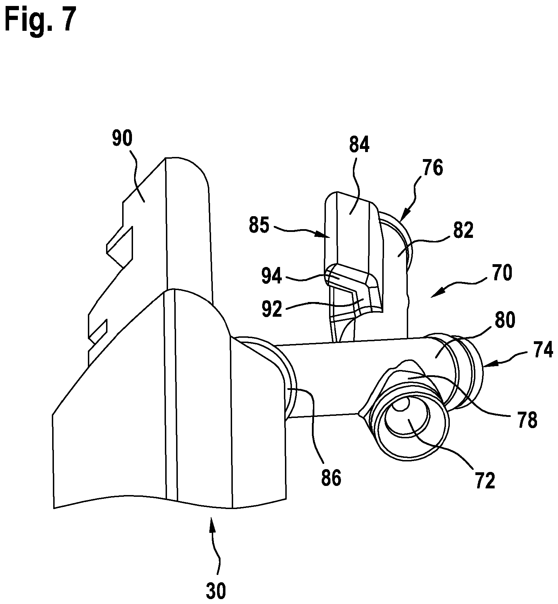

Die Wischervorrichtung umfasst eine Düseneinheit 70 (vgl. Figuren 7 bis 9). Die Düseneinheit 70 ist fluidtechnisch mit dem Kanalelement 34 verbunden. Die Düseneinheit 70 ist fluidtechnisch mit der Hauptaustrittsöffnung 42 verbunden. Die Düseneinheit 70 ist dazu vorgesehen, zumindest in dem Reinigungsbetriebszustand ein Reinigungsfluid auf der Scheibe aufzubringen. Die Fluidleiteinheit 30 ist dazu vorgesehen, der Düseneinheit 70 das Reinigungsfluid zuzuführen.

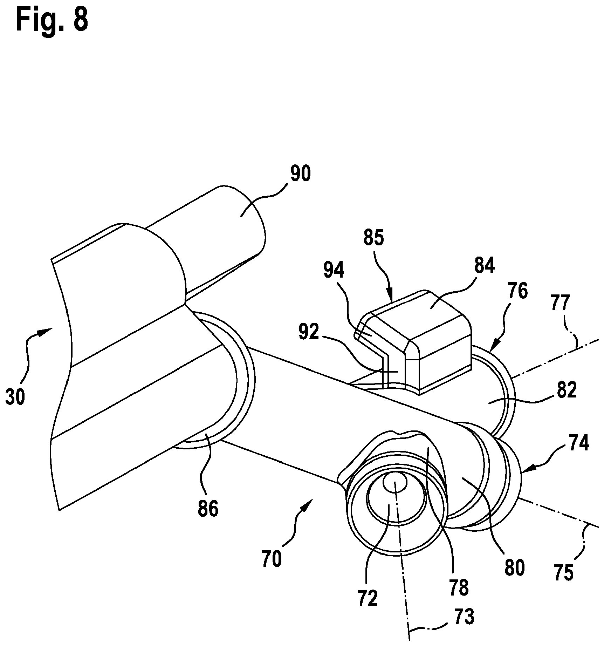

Die Düseneinheit 70 umfasst ein erstes Fluidleitelement 78. Das erste Fluidleitelement 78 ist als ein erstes Rohrelement ausgebildet. Die Düseneinheit 70 weist ein erstes Düsenelement 72 auf. Das erste Düsenelement 72 ist mit dem ersten Fluidleitelement 78 direkt fluidtechnisch verbunden. Das erste Fluidleitelement 78 ist dazu vorgesehen, dem ersten Düsenelement 72 einen ersten Teilfluidstrom zuzuführen. Das erste Düsenelement 72 ist dazu vorgesehen, den ersten Teilfluidstrom zu emittieren. Das erste Düsenelement 72 weist eine erste Strahlachse 73 auf (vgl. Figur 8).

Die Düseneinheit 70 weist ein zweites Fluidleitelement 80 auf. Das zweite Fluidleitelement 80 ist als ein zweites Rohrelement ausgebildet. Die Düseneinheit 70 weist ein zweites Düsenelement 74 auf. Das zweite Düsenelement 74 ist mit dem zweiten Fluidleitelement 80 direkt fluidtechnisch verbunden. Das zweite Fluidleitelement 80 ist dazu vorgesehen, dem zweiten Düsenelement 74 einen zweiten Teilfluidstrom zuzuführen. Das zweite Düsenelement 74 ist dazu vorgesehen, den zweiten Teilfluidstrom zu emittieren. Das zweite Düsenelement 74 weist eine zweite Strahlachse 75 auf.

Die Düseneinheit 70 umfasst ein drittes Fluidleitelement 82. Das dritte Fluidleitelement 82 ist als ein drittes Rohrelement ausgebildet. Im vorliegenden Fall umfasst die Düseneinheit 70 ein drittes Düsenelement 76. Das dritte Düsenelement 76 ist mit dem dritten Fluidleitelement 82 direkt fluidtechnisch verbunden. Das dritte Fluidleitelement 82 ist dazu vorgesehen, dem dritten Düsenelement 76 einen dritten Teilfluidstrom zuzuführen. Das dritte Düsenelement 76 ist dazu vorgesehen, den dritten Teilfluidstrom zu emittieren. Im vorliegenden Fall weist das dritte Düsenelement 76 eine dritte Strahlachse 77 auf. Alternativ könnte eine Düseneinheit lediglich ein Fluidleitelement, lediglich zwei Fluidleitelemente, mehr als drei Fluidleitelemente, lediglich ein Düsenelement, lediglich zwei Düsenelemente und/oder mehr als drei Düsenelemente aufweisen. Zudem könnte zumindest ein Fluidleitelement als ein Rohrelement ausgebildet sein.

Der Fluidstrom des Reinigungsfluids speist den ersten Teilfluidstrom, den zweiten Teilfluidstrom und den dritten Teilfluidstrom. Das erste Fluidleitelement 78, das zweite Fluidleitelement 80 und das dritte Fluidleitelement 82 bilden eine verästelte Leitung aus. Die erste Strahlachse 73 und die zweite Strahlachse 75 schließen einen Winkel von wenigstens 5° ein. Im vorliegenden Fall schließen die erste Strahlachse 73 und die zweite Strahlachse 75 einen Winkel von wenigstens 135° ein. Die erste Strahlachse 73 und die dritte Strahlachse 77 schließen einen Winkel von wenigstens 5° ein. Im vorliegenden Fall schließen die erste Strahlachse 73 und die dritte Strahlachse 77 einen Winkel von wenigstens 135° ein. Die zweite Strahlachse 75 und die dritte Strahlachse 77 schließen einen Winkel von wenigstens 5° ein. Im vorliegenden Fall schließen die zweite Strahlachse 75 und die dritte Strahlachse 77 einen Winkel von 30° ein. Grundsätzlich ist auch denkbar, dass wenigstens zwei Düsenelemente Strahlachsen aufweisen, welche parallel zueinander angeordnet sind.

Die Düseneinheit 70 weist ein erstes Kopplungselement 84 auf. Das erste Kopplungselement 84 ist zu einer Kopplung mit dem Wischarmadapter 18 vorgesehen. Das erste Kopplungselement 84 ist schienenartig ausgebildet. Das erste Kopplungselement 84 weist in einer Längserstreckungsrichtung des ersten Kopplungselements 84 betrachtet ein L-förmiges Profil auf. Das L-förmige Profil des ersten Kopplungselements 84 weist einen ersten Schenkel 92 auf. Der erste Schenkel 92 ist als ein kurzer Schenkel ausgebildet. Der erste Schenkel 92 ist mit dem dritten Fluidleitelement 82 als ein einziges Bauteil ausgebildet. Ferner weist das L-förmige Profil des ersten Kopplungselements 84 einen zweiten Schenkel 94 auf. Der zweite Schenkel 94 ist als ein langer Schenkel ausgebildet.

Der zweite Schenkel 94 ist länger ausgebildet als der erste Schenkel 92. Der erste Schenkel 92 ist mit dem zweiten Schenkel 94 als ein einziges Bauteil ausgebildet. Der zweite Schenkel 94 bildet ein Ende 85 des L-förmigen Profils des ersten Kopplungselements 84. Ferner schließt im vorliegenden Fall der erste Schenkel 92 des L-förmigen Profils mit dem zweiten Schenkel 94 des L-förmigen Profils einen Winkel von mehr als 90°, im vorliegenden Fall von mehr als 120°, und von weniger als 180°, im vorliegenden Fall von weniger als 135°, ein. Alternativ könnten zwei Schenkel eines L-förmigen Profils eines Kopplungselements gleich lang ausgebildet sein. Grundsätzlich ist auch denkbar, dass ein erster Schenkel mit einem zweiten Schenkel eines L-förmigen Profils eines Kopplungselements einen Winkel von 90° oder weniger einschließt.

Die Düseneinheit 70 umfasst ein zweites Kopplungselement 86. Das zweite Kopplungselement 86 ist zu einer Kopplung mit einem weiteren Bauteil vorgesehen. Im vorliegenden Fall ist das weitere Bauteil als die Fluidleiteinheit 30 ausgebildet. Alternativ könnte eine Düseneinheit lediglich ein Kopplungselement oder mehr als drei Kopplungselemente aufweisen, welche zu einer Kopplung mit einem Wischarmadapter vorgesehen sind. Zudem könnte zumindest ein Kopplungselement als ein Rastelement und/oder als ein Gewindeelement ausgebildet sein. Ferner könnte ein Kopplungselement ein von einer L-Form abweichendes Profil aufweisen, beispielsweise ein F-förmiges Profil, ein H-förmiges Profil und/oder ein andersartiges Profil. Es ist auch denkbar, dass ein weiteres Bauteil als ein Wischarm ausgebildet ist.

Der Wischarmadapter 18 weist ein drittes Kopplungselement 88 auf (vgl. Figuren 10 und 11). Das dritte Kopplungselement 88 ist als ein Führungselement ausgebildet. Das dritte Kopplungselement 88 ist schienenartig ausgebildet. Das dritte Kopplungselement 88 ist dazu vorgesehen, die Düseneinheit 70 bei einer Montage zu führen. Das dritte Kopplungselement 88 ist dazu vorgesehen, in dem montierten Zustand die Düseneinheit 70 in einer Richtung senkrecht zu der Längsrichtung 20 an dem Wischarmadapter 18 abzustützen. Alternativ könnte ein Wischarmadapter mehrere Kopplungselemente aufweisen. Zudem könnte zumindest ein Kopplungselement eines Wischarmadapters als ein Rastelement und/oder als ein Gewindeelement ausgebildet sein.

Das erste Kopplungselement 84 und das dritte Kopplungselement 88 sind zueinander korrespondierend ausgebildet. Das dritte Kopplungselement 88 ist dazu vorgesehen, eine lösbare Aufnahme des ersten Kopplungselements 84 bereitzustellen. Das erste Kopplungselement 84 und das dritte Kopplungselement 88 sind bei einer Montage dazu vorgesehen, zu einer Führung der Düseneinheit 70 an dem Wischarmadapter 18 zusammenzuwirken. Ferner sind das erste Kopplungselement 84 und das dritte Kopplungselement 88 in einem montierten Zustand dazu vorgesehen, zu einer Abstützung der Düseneinheit 70 an dem Wischarmadapter 18 zusammenzuwirken.

Die Wischervorrichtung weist ein Abdeckelement 60 auf. Das Abdeckelement 60 ist als ein Teil eines einzigen Bauteils ausgebildet. Der Wischarmadapter 18 umfasst das Abdeckelement 60. Der Wischarmadapter 18 und das Abdeckelement 60 bilden ein einziges Bauteil aus. Ein Teilabschnitt 68 des Abdeckelements 60 ist scheibenartig ausgebildet. Eine Oberfläche des Teilabschnitts 68 des Abdeckelements 60 ist im vorliegenden Fall parallel zu der Längsrichtung 20 angeordnet. Im vorliegenden Fall ist eine Umrissfläche des Abdeckelements 60 in der Längsrichtung 20 betrachtet kleiner als in einer jeden weiteren Richtung betrachtet. Das Abdeckelement 60 ist lichtundurchlässig ausgebildet. Alternativ könnte eine Wischervorrichtung mehrere Abdeckelemente aufweisen. Es ist auch denkbar, dass ein Abdeckelement separat von einem weiteren Bauteil eines Wischarmadapters ausgebildet ist. Ferner könnte ein gesamtes Abdeckelement plattenartig und/oder scheibenartig ausgebildet sein. Zudem könnte eine Umrissfläche eines Abdeckelements in einer von einer Längsrichtung abweichenden Richtung betrachtet kleiner als in einer jeden weiteren Richtung betrachtet sein.

Das Abdeckelement 60 weist in der Längsrichtung 20 betrachtet ein L-förmiges Profil auf (vgl. Figur 11). Das L-förmige Profil des Abdeckelements 60 umfasst einen weiteren ersten Schenkel 64. Der weitere erste Schenkel 64 ist als ein kurzer Schenkel ausgebildet. Ferner umfasst das L-förmige Profil des Abdeckelements 60 einen weiteren zweiten Schenkel 66. Der weitere zweite Schenkel 66 ist als ein langer Schenkel ausgebildet. Der weitere zweite Schenkel 66 ist länger ausgebildet als der weitere erste Schenkel 64. Der weitere erste Schenkel 64 ist mit dem weiteren zweiten Schenkel 66 als ein einziges Bauteil ausgebildet. Der weitere zweite Schenkel 66 bildet ein freies Ende des L-förmigen Profils des Abdeckelements 60. Im vorliegenden Fall schließt der weitere erste Schenkel 64 des L-förmigen Profils mit dem weiteren zweiten Schenkel 66 des L-förmigen Profils einen Winkel von mehr als 90°, im vorliegenden Fall von mehr als 110°, und von weniger als 180°, im vorliegenden Fall von weniger als 120°, ein. Alternativ könnte ein Abdeckelement ein von einer L-Form abweichendes Profil aufweisen, beispielsweise ein F-förmiges Profil, ein H-förmiges Profil und/oder ein andersartiges Profil. Ferner könnten zwei Schenkel eines L-förmigen Profils eines Abdeckelements gleich lang ausgebildet sein. Grundsätzlich ist auch denkbar, dass ein erster Schenkel mit einem zweiten Schenkel eines Profils eines Abdeckelements einen Winkel von 90° oder weniger einschließt.

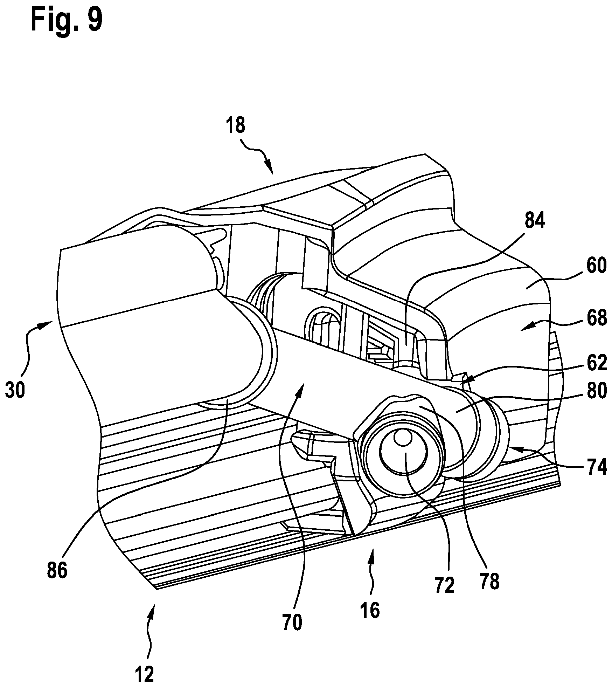

Das Abdeckelement 60 weist eine Ausnehmung 62 auf (vgl. Figuren 9 und 10). Das zweite Düsenelement 74 durchdringt teilweise die Ausnehmung 62 des Abdeckelements 60. Die Ausnehmung 62 ist in einem dem Wischarm 14 zugewandten Randbereich des Abdeckelements 60 angeordnet. Alternativ könnte ein Abdeckelement frei von einer Ausnehmung sein oder mehrere Ausnehmungen aufweisen. Ferner könnte zumindest eine Ausnehmung von einem Abdeckelement vollständig umschlossen sein.

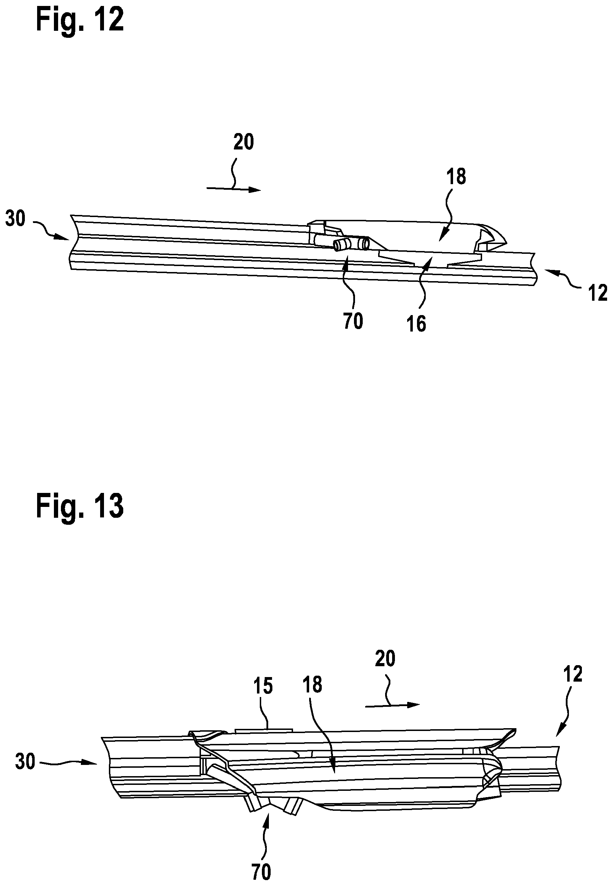

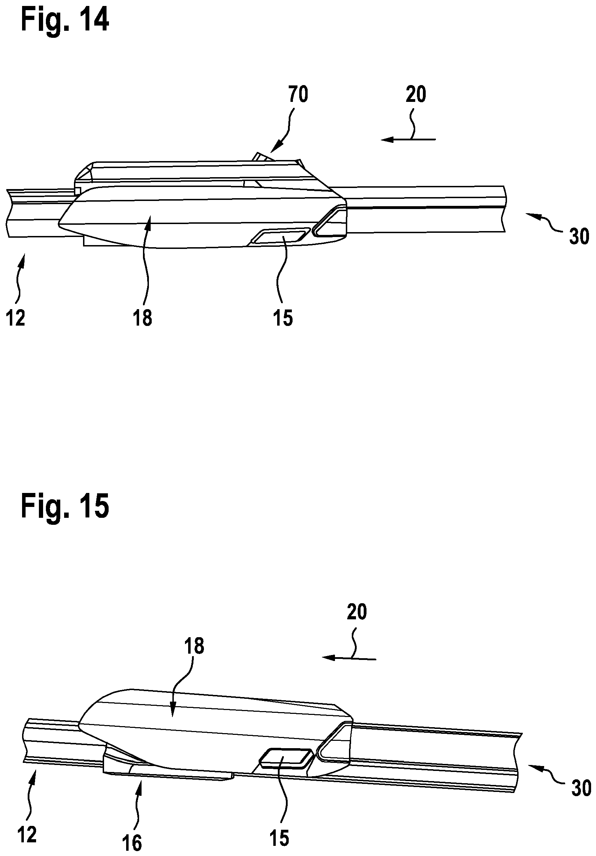

Das Abdeckelement 60 ist im vorliegenden Fall dazu vorgesehen, die Düseneinheit 70 in einem montierten Zustand in einer Abdeckrichtung 22 zumindest zu einem Großteil zu verdecken (vgl. Figuren 12 bis 15). Das Abdeckelement 60 ist dazu vorgesehen, zumindest das dritte Düsenelement 74 abzudecken. Das Abdeckelement 60 ist dazu vorgesehen, das erste Kopplungselement 84 in dem montierten Zustand in der Abdeckrichtung 22 vollständig abzudecken. Ferner ist das Abdeckelement 60 dazu vorgesehen, das dritte Kopplungselement 88 in dem montierten Zustand in der Abdeckrichtung 22 vollständig abzudecken. Die Figuren 12 bis 15 veranschaulichen eine Abdeckung des Abdeckelements 60 aus verschiedenen Betrachtungsrichtungen. Alternativ könnte ein Abdeckelement ein erstes Düsenelement und/oder ein zweites Düsenelement abdecken.

## Patentansprüche

1. Wischervorrichtung, insbesondere Scheibenwischervorrichtung, mit einer Düseneinheit (70), **wobei** wenigstens ein Abdeckelement (60), welches dazu vorgesehen ist, die Düseneinheit (70) in einem montierten Zustand in wenigstens einer Abdeckrichtung (22) zumindest teilweise zu verdecken, **dadurch gekennzeichnet, dass** ein Wischarmadapter (18) vorgesehen ist, welcher zu einer lösbaren Verbindung eines Wischblatts (12) an einem Wischarm (14) vorgesehen ist und welcher das Abdeckelement (60) zumindest teilweise umfasst, wobei die Düseneinheit (70) zumindest ein erstes Kopplungselement (84), welches zu einer Kopplung mit dem Wischarmadapter (18) vorgesehen ist, und zumindest ein zweites Kopplungselement (86), welches zu einer Kopplung mit einem weiteren Bauteil vorgesehen ist, aufweist.

2. Wischervorrichtung nach Anspruch 1, **dadurch gekennzeichnet, dass** das erste Kopplungselement (84) in wenigstens einer Richtung betrachtet ein L-förmiges Profil aufweist.

3. Wischervorrichtung nach Anspruch 1, **dadurch gekennzeichnet, dass** der Wischarmadapter (18) zumindest ein als Führungselement ausgebildetes drittes Kopplungselement (88) aufweist, das dazu vorgesehen ist, die Düseneinheit (70) bei einer Montage zu führen.

4. Wischervorrichtung nach einem der vorhergehenden Ansprüche, **dadurch gekennzeichnet, dass** das Abdeckelement (60) in wenigstens einer Richtung betrachtet ein L-förmiges Profil aufweist.

5. Wischervorrichtung nach Anspruch 4, **dadurch gekennzeichnet, dass** ein erster Schenkel (64, 92) des L-förmigen Profils mit einem zweiten Schenkel (66, 94) des L-förmigen Profils einen Winkel von mehr als 90° und von weniger als 180° einschließt.

6. Wischervorrichtung nach einem der vorhergehenden Ansprüche, **dadurch gekennzeichnet, dass** die Düseneinheit (70) ein erstes Düsenelement (72) und wenigstens ein zweites Düsenelement (74) aufweist, wobei eine erste Strahlachse (73) des ersten Düsenelements (72) mit einer zweiten Strahlachse (75) des zweiten Düsenelements (74) einen Winkel von wenigstens 5° einschließt.

7. Wischervorrichtung nach einem der vorhergehenden Ansprüche, **dadurch gekennzeichnet, dass** die Düseneinheit (70) zumindest ein Düsenelement (74) aufweist, welches eine Ausnehmung (62) des Abdeckelements (60) zumindest teilweise durchdringt.

8. Wischer (10), insbesondere Scheibenwischer, mit einer Wischervorrichtung nach einem der vorhergehenden Ansprüche.

## Claims

1. Wiper device, in particular windscreen wiper device, having a nozzle unit (70), **wherein** at least one covering element (60) which is provided for at least partially covering the nozzle unit (70) in a mounted state in at least one covering direction (22), **characterized in that** a wiper arm adapter (18) is provided which is provided for releasably connecting a wiper blade (12) to a wiper arm (14) and which at least partially surrounds the covering element (60), wherein the nozzle unit (70) has at least one first coupling element (84), which is provided for coupling to the wiper arm adapter (18), and at least one second coupling element (86), which is provided for coupling to a further component.

2. Wiper device according to Claim 1, **characterized in that** the first coupling element (84) has an L-shaped profile, as viewed in at least one direction.

3. Wiper device according to Claim 1, **characterized in that** the wiper arm adapter (18) has at least one third coupling element (88) which is designed as a guide element and is provided to guide the nozzle unit (70) during installation.

4. Wiper device according to one of the preceding claims, **characterized in that** the covering element (60) has an L-shaped profile, as viewed in at least one direction.

5. Wiper device according to Claim 4, **characterized in that** a first limb (64, 92) of the L-shaped profile encloses an angle of more than 90° and of less than 180° with a second limb (66, 94) of the L-shaped profile.

6. Wiper device according to one of the preceding claims, **characterized in that** the nozzle unit (70) has a first nozzle element (72) and at least one second nozzle element (74), wherein a first jet axis (73) of the first nozzle element (72) encloses an angle of at least 5° with a second jet axis (75) of the second nozzle element (74).

7. Wiper device according to one of the preceding claims, **characterized in that** the nozzle unit (70) has at least one nozzle element (74) which at least partially penetrates a recess (62) of the covering element (60).

8. Wiper (10), in particular windscreen wiper, having a wiper device according to one of the preceding claims.

## Revendications

1. Dispositif d'essuie-glace, en particulier dispositif d'essuie-glace de pare-brise, comprenant une unité de buse (70), **dans lequel** au moins un élément de recouvrement (60), qui est prévu pour recouvrir dans au moins une direction de recouvrement (22) au moins partiellement l'unité de buse (70) à l'état monté, **caractérisé en ce qu'un** adaptateur de bras d'essuie-glace (18) est prévu qui est destiné à relier de manière amovible un balai d'essuie-glace (12) à un bras d'essuie-glace (14) et qui englobe au moins partiellement l'élément de recouvrement (60), l'unité de buse (70) comportant au moins un premier élément d'accouplement (84), qui est prévu pour être accouplé à l'adaptateur de bras d'essuie-glace (18), et au moins un deuxième élément d'accouplement (86) qui est prévu pour être accouplé à un autre composant.

2. Dispositif d'essuie-glace selon la revendication 1, **caractérisé en ce que** le premier élément d'accouplement (84) a un profil en L lorsque l'on regarde dans au moins une direction.

3. Dispositif d'essuie-glace selon la revendication 1, **caractérisé en ce que** l'adaptateur de bras d'essuie-glace (18) comporte au moins un troisième élément d'accouplement (88) conçu comme un élément de guidage et prévu pour guider l'unité de buse (70) lors du montage.

4. Dispositif d'essuie-glace selon l'une des revendications précédentes, **caractérisé en ce que** l'élément de recouvrement (60) a un profil en L lorsque l'on regarde dans au moins une direction.

5. Dispositif d'essuie-glace selon la revendication 4, **caractérisé en ce qu'**une première branche (64, 92) du profil en L forme avec une deuxième branche (66, 94) du profil en L un angle supérieur à 90° et inférieur à 180°.

6. Dispositif d'essuie-glace selon l'une des revendications précédentes, **caractérisé en ce que** l'unité de buse (70) comporte un premier élément de buse (72) et au moins un deuxième élément de buse (74), un premier axe de jet (73) du premier élément de buse (72) formant avec un deuxième axe de jet (75) du deuxième élément de buse (74) un angle d'au moins 5°.

7. Dispositif d'essuie-glace selon l'une des revendications précédentes, **caractérisé en ce que** l'unité de buse (70) comporte moins un élément de buse (74) qui pénètre au moins partiellement dans un évidement (62) de l'élément de recouvrement (60).

8. Essuie-glace (10), en particulier essuie-glace de pare-brise, comprenant un dispositif d'essuie-glace selon l'une des revendications précédentes.
